# FASCICULE DE BREVET EUROPEEN

(11) **EP 3 592 455 B1**
(45) Date de publication et mention de la délivrance du brevet: **17.02.2021**
(21) Numéro de dépôt: 18712982.0
(22) Date de dépôt: 09.03.2018
(51) Int. Cl.: B01J 20/02, B01J 20/10, B01J 20/30, B01J 20/28

(54) **MATÉRIAU À HAUTE SURFACE SPÉCIFIQUE À BASE DE RÉSIDUS DE MÂCHEFERS, PROCÉDÉ DE FABRICATION DUDIT MATÉRIAU, ET SON UTILISATION EN TANT QUE SUPPORT D'ADSORPTION POUR ESPÈCES POLLUANTES**
MATERIAL MIT GROSSER SPEZIFISCHER OBERFLÄCHE AUF DER BASIS VON BODENASCHE-RESTEN, VERFAHREN ZUR HERSTELLUNG DIESES MATERIALS, UND SEINE VERWENDUNG ALS ADSORPTIONSTRÄGER VERSCHMUTZENDER SUBSTANZEN
MATERIAL WITH LARGE SPECIFIC SURFACE ON THE BASIS OF INCINERATOR BOTTOM SLAG RESIDUES, PROCESS FOR THE PRODUCTION OF THIS MATERIAL, AND ITS USE AS ADSORPTION SUPPORT FOR POLLUTING SUBSTANCES

(30) Priorité: 10.03.2017 FR 1751993
(43) Date de publication de la demande: 15.01.2020
(73) Titulaire: Sarp Industries, 78520 Limay (FR); College de France, 75231 Paris Cedex 05 (FR)
(72) Inventeur: SANCHEZ, Clément, 91440 Bures-sur-Yvette (FR); BOISSIERE, Cédric, 91140 Villebon sur Yvette (FR); NICOLE, Lionel, 91800 Brunoy (FR); BARADARI, Hiva, 75013 Paris (FR); CHAUCHERIE, Xavier, 78000 Versailles (FR); GILARDIN, Bruno, 27130 Verneuil sur Avre (FR)
(74) Mandataire: Plasseraud IP
(86) Numéro de dépôt international: PCT/FR2018/050546
(87) Numéro de publication internationale: WO 2018/162861

(56) Documents cités:
- WO-A1-2011/074948
- JP-A- H05 172 318
- US-A1- 2015 139 871
- US-B1- 6 284 207

## Description

L'invention concerne un procédé de fabrication d'un matériau à haute surface spécifique permettant la valorisation de mâchefers, un matériau à haute surface spécifique susceptible d'être obtenu par ce procédé ainsi que son utilisation.

### Arrière-plan technologique

A l'heure actuelle en France, l'incinération est le deuxième mode d'élimination des ordures ménagères. Le traitement des déchets par incinération est un procédé non seulement appliqué à l'ordure ménagère mais aussi aux déchets industriels.

Le procédé d'incinération donne lieu à la réduction du volume et de la masse des déchets solides, néanmoins cette réduction n'est qu'apparente. En effet l'incinération génère des fumées (5000 m³ par tonne de déchets brûlés), des résidus solides et des effluents liquides (traitements des fumées, trempe des mâchefers, etc.)

Les scories solides recueillies à la base des fours d'incinérateurs à l'issue de la combustion des déchets sont appelées mâchefers d'incinération d'ordures ménagères (MIOM) et/ou mâchefers d'incinération de déchets industriels (MIDI). Ils sont composés de cendres (sous forme de granules), d'incombustibles variés (mélange de métaux ferreux et non ferreux, de verres, de silice, d'alumine, de calcaire, de chaux, etc.), d'imbrulés et d'eau. Chaque tonne de déchets incinérés produisant 250 kg à 300 kg de mâchefers, cela représente pour le seul territoire français une production annuelle d'environ 3 millions de tonnes de mâchefers.

Grâce à certaines caractéristiques physiques des mâchefers, notamment leur bonne portance, une grande part a été valorisée en technique routière, notamment en substitution des granulats naturels. En France par exemple, plus de 2 millions de tonnes de mâchefers sont appliquées essentiellement en sous-couches routières. Cependant, la composition des mâchefers, de par la présence d'éléments polluants tels que des métaux lourds et des dioxines, est problématique sur le plan environnemental. En effet, l'eau issue du ruissellement des eaux de pluie ou de la percolation peut entraîner la dispersion des polluants et ainsi contaminer les sols environnants et les nappes phréatiques.

Afin de limiter l'impact environnement des mâchefers, il est nécessaire de déterminer leur taux de lixiviation ainsi que celui des matériaux les contenant. En ce sens, l'arrêté du 18 novembre 2011, relatif au recyclage en technique routière des mâchefers d'incinération de déchets non dangereux, a introduit des contraintes supplémentaires comme par exemple l'augmentation du nombre de substances à prendre en compte, la diminution de grande majorité des seuils de polluants ou encore le renforcement de la traçabilité de ces substances. Ces restrictions limitent donc la valorisation des mâchefers dans le domaine des techniques routières conduisant ainsi à une augmentation du stockage en décharge.

Une autre voie de valorisation des mâchefers concernant des mâchefers secs et broyés, repose sur le processus d'extraction chimique et notamment d'éléments valorisables tels que le silicium, le calcium, le fer et l'aluminium.

Cette valorisation est envisageable selon deux axes, la valorisation du SiO₂ dans l'industrie du verre et/ou dans les industries d'élaboration de SiO₂ d'une part, et la valorisation des éléments Ca, Fe et Al dans l'industrie métallurgique d'autre part.

Bien que les résidus solides des essais d'extraction solide/liquide forment des précurseurs solides potentiellement valorisables, les résidus liquides, c'est-à-dire les lixiviats de lavage, contenant des éléments valorisables, doivent être traités (e.g. neutralisation) pour pouvoir être valorisés

US 6,284,207 décrit un procédé de lixiviation sélective de laitier de haut-fourneau pour produire un composé silice-alumine.

Après de nombreuses recherches, il est donc du mérite de la demanderesse d'avoir mis au point un nouveau procédé de fabrication de matériau à haute surface spécifique à partir des résidus liquides issus de l'extraction chimique des mâchefers permettant ainsi de proposer de nouvelles voies de valorisation desdits résidus liquides.

### Résumé de l'invention

Un premier objet de l'invention concerne un procédé de fabrication d'un matériau à haute surface spécifique comprenant une étape d'atomisation d'une composition liquide à base de résidus liquides issus d'une extraction chimique de mâchefers.

Un second objet de l'invention concerne un matériau à haute surface spécifique susceptible d'être obtenu par ce procédé présentant une surface spécifique de 200 m².g⁻¹ à 900 m².g⁻¹ ainsi qu'une taille de mésopores de 2 nm à 50 nm et un volume microporeux compris entre 0 et 0,2 cm³.g-¹.

Enfin, un troisième objet de l'invention concerne l'utilisation d'un matériau à haute surface spécifique, tel qu'obtenu selon le procédé de l'invention ou tel que défini précédemment, en tant que support d'adsorption des espèces polluantes.

### Description détaillée

Un premier objet de l'invention concerne un procédé de fabrication d'un matériau à haute surface spécifique comprenant une étape d'atomisation d'une composition liquide à base de résidus liquides issus d'une extraction chimique de mâchefers.

Au sens de la présente invention, le terme « mâchefers » est utilisé pour désigner aussi bien les mâchefers d'incinération d'origine industrielle (MIDI) que les mâchefers d'incinération d'ordures ménagères (MIOM), sauf lorsque le contexte permettra d'identifier qu'il s'agit précisément de l'un ou de l'autre. Les mâchefers peuvent être traités afin d'obtenir un lixiviat aqueux enrichis en métaux.

Le terme « lixiviat » au sens de la présente invention signifie également « résidus liquides » ou encore « lixiviat de lavage » et peut correspondre au liquide résiduel qui provient de la percolation de l'eau à travers les mâchefers.

L'étape d'atomisation consiste à produire à partir d'un liquide des particules solides sphériques en faisant passer ledit liquide par une buse de pulvérisation. Ladite buse de pulvérisation peut être « mono-fluide », « bi-fluide », ou « tri-fluide » selon les termes connus de l'Homme du métier. Ladite buse de pulvérisation présente en outre un contrôle de la pression d'un gaz tel que par exemple de l'air comprimé ou de l'azote et peut fonctionner par effet Venturi, par effet piézoélectrique ou par effet centrifuge. La distribution en taille des gouttelettes obtenues est généralement de type lognormale.

Selon l'invention, l'étape d'atomisation, également appelée atomisation-séchage (« spray-drying » en anglais), d'une composition liquide à base de résidus liquides issus d'une extraction chimique de mâchefers, peut se faire dans une chambre au sein de laquelle est envoyé un gaz vecteur chauffé. Le gaz vecteur chauffé peut être un gaz non explosif, et généralement pour des installations d'échelle industrielle, le gaz vecteur peut être de l'air comprimé, de l'azote ou un mélange air/azote. Lorsque les gouttelettes sont produites, elles sont séchées par contact avec le gaz chauffé décrit ci-dessus, ce qui conduit à l'évaporation progressive du solvant qui est majoritairement de l'eau, à l'évaporation des espèces volatiles mais également au co-assemblage des espèces non volatiles contenues dans les résidus liquides issus d'une extraction chimique de mâchefers.

La température de sortie assurant le séchage dans la chambre de l'atomiseur peut être comprise dans une gamme allant de 50°C à 800°C. A noter également que la distribution de temps de séjour des gouttelettes ou particules dans la chambre d'atomisation est de l'ordre de quelques secondes. Ainsi, chaque gouttelette de ladite composition liquide permet d'obtenir une particule élémentaire sphérique.

En fonction de l'installation, les particules élémentaires sphériques non agrégées d'une taille comprise allant de 0,3 à 100 µm sont récupérées à la sortie d'un vortex ou dans un filtre à manche. De préférence, lesdites particules sont récupérées à la sortie d'un vortex.

L'atomisation présente de nombreux avantages. Elle peut être réalisée en continu ce qui représente un gain de temps par rapport à une méthode séquentielle. Ensuite, c'est une méthode peu chère pouvant être facilement mise en œuvre à l'échelle industrielle, et se trouve donc parfaitement adaptée pour l'atomisation à grande échelle de composition liquide à base de résidus liquides issus d'une extraction chimique de mâchefers. Enfin, l'impact sur l'environnement est moindre puisqu'elle ne génère pas de déchet autre que des vapeurs de solvants, lesdites vapeurs étant selon le procédé de l'invention, généralement des vapeurs d'eau.

Selon un mode de réalisation particulier, le procédé de l'invention précédemment décrit comprend une étape préalable de préparation de ladite composition liquide.

L'étape de préparation d'une composition liquide consiste à mélanger des résidus liquides issus d'une extraction chimique de mâchefers avec un agent structurant, éventuellement un agent réticulant, et éventuellement de l'eau.

A noter que dans la présente demande, classiquement l'article indéfini « un » doit être considéré comme un pluriel générique (signification de « au moins un » ou encore « un ou plusieurs »), sauf lorsque le contexte montre le contraire (1 ou « un seul »). Ainsi par exemple, lorsque l'on mentionne ci-dessus que la préparation d'une composition liquide consiste à mélanger des résidus liquides issus d'une extraction chimique de mâchefers avec un agent structurant, il convient de comprendre que des résidus liquides issus d'une extraction chimique de mâchefers sont mélangés à un ou plusieurs agents structurants.

Selon un mode de réalisation particulier, les résidus liquides issus d'une extraction chimique de mâchefers sont obtenus par extraction solide/liquide de mâchefers.

En effet, l'extraction solide/liquide consiste à mettre en contact les mâchefers avec un liquide, engendrant ainsi la dissolution d'une partie des constituants desdits mâchefers. L'extraction solide/liquide permet d'effectuer un tri des composants chimiques des mâchefers et de générer d'une part les résidus liquides, lesdits résidus liquides étant riches en métaux, et d'autre part, une phase solide très pauvre en métaux. Dans le cadre du procédé de l'invention, seul les résidus liquides issus de l'extraction de mâchefers sont utilisés pour la fabrication d'un matériau à haute surface spécifique, la phase solide peut être valorisée dans d'autres domaines, en particulier en technique routière.

Les conditions de cette extraction liquide/solide sont déterminées par l'homme du métier en fonction de facteurs physiques comme par exemple la taille et la forme des particules, l'homogénéité du matériau, le temps d'exposition, le flux du lessivant (ratio liquide/solide et force ou vitesse d'agitation dans le cas d'une lixiviation), la température, le temps d'extraction. Les conditions peuvent également être déterminées en fonction de facteurs chimiques : l'établissement d'un équilibre de solubilité où interviennent le contrôle cinétique de la dissolution, le potentiel de lessivage des constituants, le pH imposé par le matériau et/ou l'environnement extérieur, les conditions d'oxydo-réduction, les processus de sorption, de re-précipitation et de passivation.

L'extraction solide/liquide des mâchefers est avantageusement réalisée avec une solution acide et/ou oxydante. La solution acide et/ou oxydante utilisée pour l'extraction solide/liquide est choisie dans le groupe comprenant une solution d'acide chlorhydrique (HCl), d'acide sulfurique (H₂SO₄), d'acide fluorhydrique (HF), d'oxyde de sodium (Na₂O), d'oxyde de potassium (K₂O), et leurs mélanges. D'une manière préférentielle, la solution employée pour l'extraction solide/liquide est une solution d'acide chlorhydrique (HCl), et préférentiellement une solution d'acide chlorhydrique (HCl) concentrée de 30 à 40%, et notamment à environ 37%.

Selon un mode de réalisation particulier, ladite composition liquide à base de résidus liquides issus d'une extraction chimique de mâchefers est obtenue par mélange des résidus liquides tels qu'obtenus ci-dessus avec un agent structurant.

La présence d'un agent structurant au sein de ladite composition liquide est particulièrement intéressante car elle permet d'une part de structurer les particules à l'échelle nanométrique et d'autre part, lors de son retrait ultérieur, de générer une porosité dans les particules obtenues, de façon à créer des pores de tailles nanométriques, autrement dit, d'obtenir un matériau mésostructuré. Un matériau mésostructuré est un matériau comprenant des mésopores présentant une taille allant de 2 nm à 50 nm, de préférence de 2 nm à 30 nm, et de préférence encore, de 2 nm à 10 nm.

L'agent structurant peut être choisi dans le groupe comprenant les tensioactifs, le polyéthylène glycol (PEG), le poly(alcool vinylique) (PVAL), le polyacrylamide, ou encore le polyvinylpyrrolidone, les composés cellulosiques (par exemple : éther de cellulose), les sels minéraux (par exemple : NaCl ou CaCl₂), la caséine ainsi que leurs mélanges.

Lorsque l'agent structurant est un tensioactif, il peut être ionique ou non ionique. Selon un mode de réalisation particulier, l'agent structurant est un tensioactif non ionique et il peut être choisi dans le groupe comprenant les alcanolamides, les oligopeptides, les dérivés de sucres, les dérivés polyéthylènes tels que le polyéthylène glycol hexadécyl éther (Brij®58) et leurs mélanges.

Le tensioactif non ionique peut également être un copolymère possédant au moins deux parties de polarités différentes leur conférant des propriétés de macromolécules amphiphiles. Ces copolymères peuvent comporter au moins un bloc faisant partie de la liste non exhaustive des familles de polymères suivantes : les polymères fluorés (par exemple -[CH₂CH₂CH₂CH₂O-CO-R1]- avec R1 = C₄F₉, C₈F₁₇, etc.), les polymères biologiques comme les polyacides aminés (poly-lysine, alginates, etc.), les dendrimères, ou encore les polymères constitués de chaînes de poly(oxyde d'alkylène).

De façon générale, les copolymères à caractère amphiphile connus de l'Homme du métier peuvent être utilisés en tant que tensioactif, comme par exemples ceux décrits dans les publications suivantes : S. Förster, M. Antionnetti, Adv.Mater, 1998, 10, 195-217 ; S. Förster, T.Plantenberg, Angew. Chem. Int. Ed, 2002, 41, 688-714 ; H. Cölfen, Macromol. Rapid Commun, 2001, 22, 219-252.

Dans ce cas d'un copolymère amphiphile en tant que tensioactif, on peut utiliser un copolymère amphiphile dont un bloc au moins est constitué de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène).

Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe.

Pour un copolymère à trois blocs, l'un au moins des blocs est constitué d'une chaîne de poly(oxyde d'alkylène) de nature hydrophile tandis que l'un au moins des autres blocs est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées (PEO)ₓ et (PEO)_{z} et les chaînes de poly(oxyde d'alkylène) de nature hydrophobe sont des chaînes de poly(oxyde de propylène) notées (PPO)_{y}, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, on utilise un composé de formule (PEO)ₓ-(PPO)_{y}-(PEO)_{z} où x est compris entre 5 et 300 et y est compris entre 33 et 300 et z est compris entre 5 et 300. De préférence, les valeurs de x et z sont identiques. On utilise très avantageusement un composé dans lequel x = 20, y = 70 et z = 20 (Pluronic® P123) et un composé dans lequel x = 106, y = 70 et z = 106 (Pluronic® F127). Les tensioactifs non-ioniques commerciaux connus sous le nom de Pluronic® (BASF) comme par exemple le Pluronic® F127 ou P123, Tetronic® (BASF), Triton® (Sigma), Tergitol® (Union Carbide), Brij® (Sigma-Aldrich) comme par exemple le Brij®58, peuvent être utilisés en tant que tensioactifs non-ioniques.

Les tensioactifs anioniques utilisés de préférence dans le procédé selon la présente invention peuvent être des molécules amphiphiles anioniques telles que les sulfates, comme par exemple CₚH₂ₚ₊₁OSO₃Na avec p=12, 14, 16 ou 18, ou les sulfonates, comme par exemple C₁₆H₃₃SO₃H et C₁₂H₂₅C₆H₄SO₃Na.

Selon un mode de réalisation particulier, l'agent structurant est un tensioactif ionique, comme par exemple un tensioactif amphiphile cationique. A titre d'exemples de tensioactif amphiphile cationique, on peut notamment citer les sels d'imidazolium, de pyridinium, ou de phosphonium mais également les sels d'ammonium quaternaires tels que ceux de la formule (I) ci-après.

Ainsi, des sels d'ammonium quaternaires particuliers peuvent être notamment choisis parmi ceux répondant à la formule générale (I) suivante : 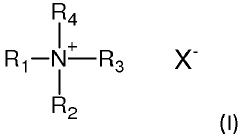 dans laquelle les radicaux **R₁** à **R₄**, qui peuvent être identiques ou différents, représentent un groupe alkyle, linéaire ou ramifié, comportant de 1 à 30 atomes de carbone, et X représente un atome d'halogène tel qu'un atome de chlore ou de brome, ou un sulfate.

Parmi les sels d'ammonium quaternaires de formule (I), on peut notamment citer les halogénures de tétraalkylammonium, comme par exemple les halogénures de dialkyldiméthylammonium ou d'alkyltriméthylammonium dans lesquels le radical alkyle comporte environ de 12 à 22 atomes de carbone, en particulier les halogénures de béhényltriméthylammonium, de distéaryldiméthylammonium, de cétyltriméthylammonium, de benzyldiméthylstéarylammonium. De préférence, les halogénures sont les bromures.

D'une manière préférentielle, l'agent structurant utilisé en mélange avec les résidus liquides issus d'une extraction chimique de mâchefers selon l'étape de préparation précédemment décrite est le polyéthylène glycol hexadécyl éther, le bromure de cétyltriméthylammonium (CTAB), le Pluronic® F127, le Pluronic® P123 ou encore un quelconque mélange de ces tensioactifs.

Selon un mode de réalisation particulier, la composition à base de résidus liquides issus de l'extraction chimique de mâchefers peut également comprendre au moins un précurseur d'une matrice inorganique ou hybride organique/inorganique. Ainsi, la composition peut comprendre au moins un précurseur inorganique et/ou au moins un précurseur hybride organique/inorganique. On entend par précurseur inorganique un précurseur qui donne lieu dans une réaction sol/gel à la création d'une matrice inorganique. De même, on entend par précurseur hybride organique/inorganique un précurseur qui donne lieu dans une réaction sol/gel à la création d'une matrice hybride organique/inorganique.

Le précurseur permet de contribuer à la création d'une matrice inorganique ou hybride organique/inorganique et de s'affranchir de la variabilité chimique intrinsèque liées aux résidus liquides issus de l'extraction chimique des mâchefers. En effet, comme il existe une variabilité chimique entre les MIDI et les MIOM et même entre des MIDI ou des MIOM ne provenant pas du même centre d'incinération, il existe aussi par conséquent une variabilité chimique entre les résidus liquides issus de l'extraction chimique de ces mêmes mâchefers.

Selon un mode de réalisation particulier, le précurseur est un précurseur inorganique, notamment un précurseur silicique ou aluminique, préférentiellement un précurseur silicique. Lorsque le précurseur est silicique, il est avantageusement choisi dans le groupe comprenant l'acide silicique, les alcoxydes de silicium, le silicate, la silice colloïdale, le méthyltriéthoxysilane (MTEOS), le phényltriéthoxysilane (PTEOS), le tétraéthylorthosilicate (TEOS), l'aminopropyltriéthoxysilane (APTES), le tétrachlorure de silicium SiCl₄, et leurs mélanges. D'une manière préférentielle, le précurseur est le tétraéthylorthosilicate (TEOS), le SiCl₄, le méthyltriéthoxysilane (MTEOS) ou leurs mélanges.

Le ratio molaire entre l'agent structurant et le précurseur permet notamment de conditionner le volume poreux de la particule finale, la connectivité du réseau poreux et la distribution en taille des pores produits. Ainsi, les quantités molaires de précurseurs ajoutés à ladite composition peuvent être ajustées de manière à obtenir dans le produit sec après une étape d'atomisation-séchage, un pourcentage volumique en agent structurant comprise entre 10% et 90% du volume total, de préférence entre 25 % et 75%. Autrement dit, les quantités de précurseurs sont ajustées de manière à ce que le matériau à haute surface spécifique obtenu après une étape d'atomisation-séchage, présente un pourcentage volumique d'agent structurant compris entre 10 et 90% du volume total, de préférence entre 25 et 75%. Le ratio molaire entre l'agent structurant et le(s) précurseur(s) peut être compris de 0,002 à 0,5, de préférence de 0,02 à 0,4, de préférence encore de 0,02 à 0,3, et tout particulièrement de 0,02 à 0,2.

Selon un mode de réalisation particulier, lorsque l'agent structurant est un tensioactif de la famille des Brij, tel que par exemple le Brij® 58, et le précurseur le SiCl₄, le rapport molaire Brij® 58/ SiCl₄ est compris entre 0,03 et 0,2.

Selon un mode de réalisation particulier, lorsque l'agent structurant est un tensioactif non ionique tel que le Pluronic® F127 et le précurseur le SiCl₄, le rapport molaire tensioactif non ionique/ SiCl₄ est compris entre 0,002 et 0,02.

Selon un mode de réalisation particulier, lorsque l'agent structurant est un sel d'ammonium quaternaire tel que le bromure de cétyltriméthylammonium (CTAB) et le précurseur le SiCl₄, le rapport molaire sel d'ammonium quaternaire/SiCl₄ est compris entre 0,08 et 0,4.

Selon un autre mode de réalisation particulier, au moins un précurseur hybride organique-inorganique peut être rajouté audit précurseur inorganique selon une quantité comprise entre 1 et 50 % molaire et préférentiellement entre 5 et 30 % molaire des précurseurs introduits. Ledit ou lesdits précurseur(s) hybride(s) comportant un ou plusieurs groupes hydrolysables peuvent être de type alcoxyde ou halogénure métallique, de préférence alcoxyde métallique, de formule (II) ou (III) suivantes:

R'ₓSi Z₄₋ₓ (II)

Z₃Si-R"-SiZ₃ (III)

dans lesquelles :
x est un nombre entier allant de 1 à 3 ;
Z représente, indépendamment l'un de l'autre, un atome d'halogène ou un groupement -O**R**, et de préférence un groupement -O**R** ;
**R** représente un groupe alkyle comprenant de préférence 1 à 4 atomes de carbone, tel qu'un groupe méthyle, éthyle, n-propyle, i-propyle, n-butyle, s-butyle ou t-butyle, de préférence méthyle, éthyle ou i-propyle, et de préférence encore éthyle ;
**R**' représente, indépendamment l'un de l'autre, un proton ou bien un groupe non hydrolysable choisi parmi les groupes alkyle, notamment en C1-4, par exemple, méthyle, éthyle, propyle ou butyle ; les groupes alcényle en particulier en C2-4, tels que vinyle, 1-propényle, 2-propényle et butényle ; les groupes alcynyle en particulier en C2-4, tels que acétylényle et propargyle ; les groupes aryle en particulier en C6-10, tels que phényle et naphtyle ; les groupes méthacryle ou méthacryloxy(alkyle en C1-10) tel que méthacryloxypropyle ; les groupes époxyalkyle ou époxyalcoxyalkyle dans lesquels le groupe alkyle est linéaire, ramifié ou cyclique, en C1-10, et le groupe alcoxy comporte de 1 à 10 atomes de carbone, tels que glycidyle et glycidyloxy(alkyle en Cl-10) ; les groupes halogénoalkyle en C2-10 tel que 3-chloropropyle ; les groupes perhalogénoalkyle en C2-10 tel que perfluoropropyle ; les groupes mercaptoalkyle en C2-10 tel que mercaptopropyle ; les groupes aminoalkyle en C2-10 tel que 3-aminopropyle ; les groupes (aminoalkyle en C2- 10)amino(alkyle en C2-10) tel que 3-[(2-aminoéthyl)amino]propyle ; les groupes di(alkylène en C2- 10)triamino(alkyle en C2-10) tel que 3-[diéthylènetriamino]propyle et les groupes imidazolyl-(alkyle en C2-10) ;
**R"** représente une fonction non-hydrolysable choisie parmi les groupes alkylène de préférence en C1-12, par exemple, méthylène, éthylène, propylène, butylène, hexylène, octylène, décylène et dodécylène ; les groupes alcynylène de préférence en C2-12, par exemple, acétylénylène (-C≡C-), -C≡C-C≡C-, et -C≡C-C₆H₄-C≡C-; les groupes N,N-di(alkylène en C2-10)amino tels que N,N-diéthylèneamino ; les groupes bis[N,N-di(alkylène en C2- 10)amino] tels que bis[N-(3-propylène)-N-méthylèneamino] ; mercaptoalkylène en C2- 10 tels que mercaptopropylène ; les groupes (alkylène en C2- 10)polysulfure tel que propylène-disulfure ou propylène-tétrasulfure ; les groupes alcénylène en particulier en C2-4, tels que vinylène ; les groupes arylène en particulier en C6-10, tels que phénylène ; les groupes di(alkylène en C2- 10)arylène en C6-10, tels que di(éthylène)phénylène; les groupes N,N'-di(alkylène en C2-10)uréido tels que N,N'-dipropylèneuréido.

A titre d'exemples d'organoalcoxysilane de formule (II), on peut notamment citer le 3-aminopropyltrialcoxysilane (RO)₃Si-(CH₂)₃-NH₂, le 3-(2-aminoéthyl)aminopropyltrialcoxysilane (RO)₃Si-(CH₂)₃-NH-(CH₂)₂-NH₂, la 3-(trialcoxysilyl)propyldiéthylènetriamine (RO)₃Si-(CH₂)₃-NH-(CH₂)₂-NH-(CH₂)₂-NH₂ ; le 3-chloropropyltrialcoxysilane (RO)₃Si-(CH₂)₃Cl, le 3-mercaptopropyltrialcoxysilane (RO)₃Si-(CH₂)₃SH ; les azoles organosilylés de type N-(3-trialcoxysilylpropyl)-4,5-dihydroimidazole, R ayant la même signification que ci-dessus.

Comme exemples de bis-alcoxysilane de formule (III), on utilise de préférence un bis-[trialcoxysilyl]méthane (RO)₃Si-CH₂-Si(OR)₃, un bis-[trialcoxysilyl]éthane (RO)₃Si-(CH₂)₂-Si(OR)₃, un bis-[trialcoxysilyl]octane (RO)₃Si-(CH2)₈-Si(OR)₃, une bis[trialcoxysilylpropyl]amine (RO)₃Si-(CH₂)₃-NH-(CH₂)₃-Si(OR)₃, une bis-[trialcoxysilylpropyl]éthylènediamine (RO)₃Si-(CH₂)₃-NH-(CH₂)₂-NH-(CH₂)₃-Si(OR)₃; un bis-[trialcoxysilylpropyl]disulfide (RO)₃Si-(CH₂)₃-S₂-(CH₂)₃-Si(OR)₃, un bis-[trialcoxysilylpropyl]tétrasulfide (RO)₃Si-(CH₂)₃ -S₄-(CH₂)₃-Si(OR)₃, un bis-[trialcoxysilylpropyl]urée (RO)₃Si-(CH₂)₃-NH-CO-NH-(CH₂)₃-Si(OR)₃; un bis[trialcoxysilyléthyl]phényle (RO)₃Si-(CH₂)₂-C₆H₄-(CH₂)₂-Si(OR)₃, R ayant la même signification que ci-dessus.

Selon un mode de réalisation particulier, la composition à base de résidus liquides issus de l'extraction chimique de mâchefers comprend au moins un précurseur hybride organique-inorganique tel que décrit ci-dessus.

Selon un mode de réalisation particulier l'étape d'atomisation-séchage est réalisée par l'intermédiaire d'une buse tri-fluide. Selon ce mode de réalisation, la composition liquide à base de résidus liquides issus d'une extraction chimique de mâchefers obtenue par mélange des résidus liquides tels qu'obtenus ci-dessus avec un agent structurant, peut constituer un premier fluide, tandis qu'un second fluide peut être constitué par une solution comprenant le précurseur. De plus, la buse de pulvérisation « tri-fluide » peut aussi permettre le mélange des résidus liquides issus d'une extraction chimique de mâchefers avec l'agent structurant au moment de l'atomisation.

Selon un mode de réalisation particulier, le procédé de fabrication d'un matériau à haute surface spécifique comprend, après ladite étape d'atomisation-séchage (en anglais : spray-drying), une étape d'élimination de l'agent structurant.

Cette étape va permettre d'éliminer l'agent structurant présent dans les particules, de créer une porosité et de renforcer mécaniquement le réseau inorganique environnant.

Selon l'invention, l'élimination de l'agent structurant peut être réalisée par une étape de traitement thermique ou par une étape de traitement chimique et préférentiellement, l'élimination de l'agent structurant est réalisée par traitement thermique.

Avantageusement, l'étape de traitement thermique est une étape de calcination. La calcination consiste à chauffer à une température de 200°C à 800°C, de préférence à une température de 250°C à 550°C, pendant une durée de 1h à 3h, et de manière préférée pendant une durée d'environ 2h.

La calcination présente l'avantage, en outre de permettre l'élimination de l'agent structurant, de transformer les métaux présents dans les particules solides sphériques en oxyde de métaux, comme par exemple la transformation du Fer en hématite (Fe₂O₃).

Selon un autre mode de réalisation particulier, le procédé de fabrication d'un matériau à haute surface spécifique comprend, en lieu et place de l'étape de calcination, une étape de traitement chimique, à savoir une extraction chimique. En effet, l'agent structurant peut aussi être retiré par une extraction chimique. Selon la nature de l'agent structurant utilisé, l'homme du métier saura choisir le solvant d'extraction. Par exemple, l'extraction peut être réalisée par de l'éthanol ou par un mélange hydroalcoolique contenant au moins 10% volumique d'éthanol.

Selon un mode de réalisation particulier, le procédé de fabrication selon l'invention peut comprendre en outre, après ladite étape d'élimination de l'agent structurant, une étape de lavage et de séchage. Cette dernière étape permet de retirer les éventuels sels solubles, par exemple de sels NaCl ou CaCl₂ (sels concentrés lors de la formation des particules durant la phase d'atomisation-séchage) permettant ainsi d'augmenter la surface spécifique finale. L'étape de lavage est avantageusement réalisée avec de l'eau.

Avantageusement, le procédé de fabrication selon l'invention permet d'obtenir un matériau à haute surface spécifique dont la fraction en masse de matière sèche issue des lixiviats de mâchefers dans le matériau final est comprise entre 10 et 80 %, et de préférence entre 20 et 65 %.

L'expression « haute surface spécifique » signifie que le matériau fabriqué selon le procédé de l'invention présente une surface spécifique BET d'au moins 200 m².g⁻¹, et de préférence une surface spécifique d'au moins 200 m².g⁻¹ et d'au plus 900 m².g⁻¹.

Le procédé selon l'invention est donc particulièrement avantageux car il permet de proposer une nouvelle voie de valorisation des mâchefers et tout particulièrement, une nouvelle voie de valorisation des résidus liquides issus d'une extraction chimique. Ainsi, le procédé selon l'invention permet à partir desdits résidus liquides d'obtenir un matériau à haute surface spécifique.

Dans un second objet, l'invention concerne un matériau à base de résidus de mâchefers susceptible d'être obtenu par le procédé de l'invention, ledit matériau étant caractérisé par une haute surface spécifique allant de 200 m².g⁻¹ à 900 m².g⁻¹ ainsi que par une taille de mésopores allant de 2 nm à 50 nm.

Les matériaux à haute surface spécifique selon l'invention sont dits mésostructurés et peuvent être obtenus par le procédé précédemment décrit. Ils peuvent être définis par une surface spécifique de 200 m².g⁻¹ à 900 m².g⁻¹ déterminée notamment par volumétrie à l'azote. Selon le type d'agents structurants utilisés et les conditions de synthèses (température lors de l'étape d'atomisation-séchage), les particules peuvent en outre présenter une microporosité dont le volume est compris entre 0 et 0,2 cm³.g⁻¹.

En effet, la volumétrie à l'azote correspondant à l'adsorption physique de molécules d'azote dans la porosité du matériau via une augmentation progressive de la pression à température constante renseigne sur les caractéristiques texturales particulières du matériau selon l'invention (diamètre de pores, type de porosité, surface spécifique, volume poreux, distribution de la taille des pores). En particulier, elle permet d'accéder à la surface spécifique et à la distribution mésoporeuse du matériau.

On entend par surface spécifique, la surface spécifique B.E.T. (SBET en m².g⁻¹) déterminée par adsorption d'azote conformément à la norme ASTM D 3663-78 établie à partir de la méthode BRUNAUER-EMMETT-TELLER décrite dans le périodique « The Journal of American Society", 1938, 60, 309. La distribution poreuse représentative d'une population de mésopores centrée dans une gamme de 1,5 à 50 nm est déterminée par le modèle Barrett-Joyner-Halenda (BJI-1). L'isotherme d'adsorption - désorption d'azote selon le modèle BJH ainsi obtenue est décrite dans le périodique "The Journal of American Society", 1951, 73, 373 écrit par E. P. Barrett, L. G. Joyner et P. P. Halenda. Dans l'exposé qui suit, le diamètre des mésopores φ de la matrice mésostructurée donné correspond au diamètre moyen à l'adsorption d'azote défini comme étant un diamètre auquel la valeur de la dérivée du volume adsorbée en fonction de la taille de pore est maximale.

Les matériaux à haute surface spécifique selon l'invention, qui se présentent sous la forme de particules sphériques et non agrégées, ont une taille qui dépend de la géométrie de l'atomiseur utilisé, et notamment de la buse de pulvérisation. D'une manière préférentielle, les matériaux à haute surface spécifique obtenus présentent une taille allant de 0,3 µm à 100 µm, notamment de 1 µm à 50 µm avec une distribution en taille centrée autour de 5 µm.

La détermination de la taille des matériaux à haute surface spécifique peut se faire par microscopie électronique par transmission (MET), par microscopie électronique par balayage (MEB). Ces techniques permettent la formation d'une image du solide étudié, les contrastes observés étant caractéristiques de l'organisation structurale, de la texture ou bien de la morphologie des particules observées, la résolution de la technique atteignant au maximum 0,2 nm. Alternativement, La détermination de la taille des matériaux à haute surface spécifique peut se faire par granulométrie laser.

La microscopie électronique par transmission (MET) permet aussi de définir le type de porosité desdits matériaux. L'observation des matériaux selon l'invention permet ainsi d'identifier une porosité de type vermiculaire, cylindrique ou bien des cavités sphériques. Les mésopores présentent une taille allant de 2 nm à 50 nm, de préférence de 2 nm à 30 nm, et de préférence encore de 2 nm à 10 nm. Les matériaux à haute surface spécifique selon la présente invention peuvent donc être qualifiés de mésoporeux.

Avantageusement, le matériau à haute surface spécifique selon l'invention comprend une fraction en masse de matière sèche issue des lixiviats de mâchefers comprise entre 10 et 80 %, et de préférence entre 20 et 65 %.

Enfin, un troisième objet de l'invention concerne l'utilisation d'un matériau à haute surface spécifique tel que défini précédemment, en tant que support d'adsorption d'espèces polluantes.

Les matériaux à haute surface spécifique de la présente invention ou obtenus selon le procédé de l'invention se révèlent être de très de bons adsorbants lorsqu'ils sont utilisés pour l'adsorption d'espèce polluantes notamment contenues dans les fumées de cheminées industrielles. La présente invention a donc également pour objet l'utilisation d'un matériau mésostructuré selon l'invention comme adsorbant ou comme tamis moléculaire pour la séparation.

L'invention sera mieux comprise à l'aide des exemples qui suivent qui illustrent la présente demande et en référence aux dessins annexés sur lesquels :
- Les figures 1a et 1b représentent respectivement les diffractogrammes du matériau conçu avant et après calcination
- La figure 2 représente les clichés en microscopie électronique à balayage (MET) du matériau obtenu après l'étape de calcination.

### Exemples

### Exemple 1 : Obtention des résidus liquides issus d'une extraction chimique de mâchefers.

Le lixiviat de mâchefers est obtenu à partir de 1 kg de mâchefers séchés, broyés et criblés inférieur à 100 µm auquel sont rajoutés sous hotte aspirante, 1,18 kg d'acide chlorhydrique à 37 % en masse par petites fractions afin de limiter la réaction exothermique.

Une fois l'addition d'acide chlorhydrique terminée (le changement d'état pâteux vers liquide est très rapide, à l'obtention de l'état liquide la réaction exothermique s'arrête), 2 kg d'eau de réseau urbain sont ajoutées sous agitation pendant 10 minutes. Cet ajout permet notamment de rendre filtrable la préparation. Le mélange est ensuite filtré sur entonnoir avec papier filtre de porosité 10 µm.

### Exemple 2 : Fabrication d'un matériau à haute surface spécifique.

Plusieurs matériaux mésostructurés à haute surface spécifique ont été fabriqués selon le procédé de l'invention à partir de résidus liquides issus d'une extraction chimique de mâchefers et en faisant varier la nature de(s) agent(s) structurant(s) et du précurseur et la quantité de(s) agent(s) structurant(s).

Pour chacune des fabrications, l'atomisation est réalisée avec un atomiseur-sécheur Büchi® B-290 et les particules présentent un diamètre compris entre 0,5 et 10 µm (diamètre déterminé par microscopie électronique à balayage).
a) Matériau mésostructuré à haute surface spécifique micronique à base de lixiviat de lavage de mâchefers, de TEOS et de brij®58 (composition molaire : 1 extrait sec lixiviat : 1 TEOS : 0,12 brij®58).

Dans un bécher de 500 mL, sont ajoutés dans l'ordre et sous agitation magnétique (500 tours.min⁻¹) les composés suivants : 25 mL de lixiviat de lavage de mâchefers avec HCl (37 % en masse), 200 mL d'eau osmosée et 20,49 g de brij®58.

La solution est ensuite maintenue sous agitation à 60°C jusqu'à dissolution complète du brij®58. Après dissolution du tensioactif et refroidissement de la solution à 25°C, 31,62 g de tétraéthoxysilane (TEOS) sont ajoutés à la solution au goutte à goutte à l'aide d'une pipette pasteur.

La solution est ensuite maintenue sous agitation à 25°C pendant 1 à 2 heures jusqu'à l'obtention d'une solution limpide.

La solution est alors atomisée en gouttelettes micrométriques dans un flux de gaz chaud (air) à l'aide d'une mono-buse présentant une ouverture de diamètre 0,7 mm.

Le débit de circulation de la solution a été fixé à 0,36 L.h⁻¹. Le débit d'air comprimé pour l'atomisation a été fixé à 670 L.h⁻¹. La circulation d'air pour l'aspiration des gouttelettes atomisées a été fixée à 34 m³/h. La température de consigne en entrée de l'atomiseur a été fixée à 170-180°C pour que la température de sortie observée soit d'environ 90°C.

Les particules ainsi synthétisées et récupérées dans le bac de récupération sont alors stockées hermétiquement dans un flacon en polypropylène à température ambiante pour être ensuite calcinées à 450°C dans un four (rampe de 3°C/min et palier de 2h à 450°C).

Le matériau obtenu est sous forme de poudre et présente une surface spécifique BET de 505 m²/g.
b) Matériau mésostructuré à haute surface spécifique micronique à base de lixiviat de lavage de mâchefers, de TEOS et de brij®58 (composition molaire : 1 extrait sec lixiviat : 1 TEOS : 0,20 brij®58).

Dans un bécher de 500 mL, sont ajoutés dans l'ordre et sous agitation magnétique (500 tours.min⁻¹) les composés suivants : 25 mL de lixiviat de lavage de mâchefers avec HCl (37 % en masse), 200 mL d'eau osmosée et 34,15 g de brij®58.

La solution est ensuite maintenue sous agitation à 60°C jusqu'à dissolution complète du brij®58. Après dissolution du tensioactif et refroidissement de la solution à 25°C, 31,62 g de tétraéthoxysilane (TEOS) sont ajoutés à la solution au goutte à goutte à l'aide d'une pipette pasteur.

La solution est ensuite maintenue sous agitation à 25°C pendant 1 à 2 heures jusqu'à l'obtention d'une solution limpide.

La solution est alors atomisée en gouttelettes micrométriques dans un flux de gaz chaud (air) à l'aide d'une mono-buse présentant une ouverture de diamètre 0,7 mm.

Le débit de circulation de la solution a été fixé à 0,36 L.h⁻¹. Le débit d'air comprimé pour l'atomisation a été fixé à 670 L.h⁻¹. La circulation d'air pour l'aspiration des gouttelettes atomisées a été fixée à 34 m³/h. La température de consigne en entrée de l'atomiseur a été fixée à 170-180°C pour que la température de sortie observée soit d'environ 90°C.

Les particules ainsi synthétisées et récupérées dans le bac de récupération sont alors stockées hermétiquement dans un flacon en polypropylène à température ambiante pour être ensuite calcinées à 450°C dans un four (rampe de 3°C/min et palier de 2h à 450°C).

Le matériau obtenu est sous forme de poudre et présente une surface spécifique BET de 410 m²/g.
c) Matériau mésostructuré à haute surface spécifique micronique à base de lixiviat de lavage de mâchefers, de TEOS, de MTEOS et de brij®58 (composition molaire : 1 extrait sec lixiviat : 0,95 TEOS : 0,05 MTEOS : 0,12 brij®58).

Dans un bécher de 500 mL, sont ajoutés dans l'ordre et sous agitation magnétique (500 tours.min⁻¹) les composés suivants : 40 mL de lixiviat de lavage de mâchefers avec HCl (37 % en masse), 100mL d'eau osmosée et 24,14 g de brij®58.

La solution est ensuite maintenue sous agitation à 60°C jusqu'à dissolution complète du brij®58. Après dissolution du tensioactif et refroidissement de la solution à 25°C, 29,99 g de tétraéthoxysilane (TEOS) et 0,64 g de méthyltriéthoxysilane (MTEOS), sont ajoutés à la solution au goutte à goutte à l'aide d'une pipette pasteur.

La solution est ensuite maintenue sous agitation à 25°C pendant 1 à 2 heures jusqu'à l'obtention d'une solution limpide. La solution est alors atomisée en gouttelettes micrométriques dans un flux de gaz chaud (air) à l'aide d'une mono-buse présentant une ouverture de diamètre 0,7 mm.

Le débit de circulation de la solution a été fixé à 0,36 L.h⁻¹. Le débit d'air comprimé pour l'atomisation a été fixé à 670 L.h⁻¹. La circulation d'air pour l'aspiration des gouttelettes atomisées a été fixée à 34 m³/h.

La température de consigne en entrée de l'atomiseur a été fixée à 170-180°C pour que la température de sortie observée soit d'environ 90°C.

Les particules ainsi synthétisées et récupérées dans le bac de récupération sont alors stockées hermétiquement dans un flacon en polypropylène à température ambiante pour être ensuite calcinées à 350°C dans un four (rampe de 3°C/min et palier de 2h à 350°C).

Le matériau obtenu est sous forme de poudre et présente une surface spécifique BET de 440 m²/g.
d) Matériau mésostructuré à haute surface spécifique micronique à base de lixiviat de lavage de mâchefers, de SiCl₄ réalisée et de brij®58 (composition molaire : 1 extrait sec lixiviat : 1 SiCl₄ : 0,12 brij®58).

Dans un bécher de 300 mL, sont ajoutés dans l'ordre et sous agitation magnétique (500 tours.min⁻¹) les composés suivants : 12,5 mL de lixiviat de lavage de mâchefers avec HCl (37 % en masse), 100 mL d'eau osmosée et 10,24 g de brij®58.

La solution est ensuite maintenue sous agitation à 60°C jusqu'à dissolution complète du brij®58. Dans un second bécher de 500 mL, 12,9 g de SiCl₄ conservé à 4°C sont ajoutés au goutte à goutte à 22,15 mL d'éthanol absolu conservé à 4°C. La réaction étant exothermique et très réactive, ce mélange s'effectue dans un bain de glace sous forte agitation (1000 tours.min⁻¹).

Après dissolution du tensioactif et refroidissement de la solution de lixiviat/brij58 à 25°C, celle-ci est ajoutée à la solution de SiCl₄/éthanol au goutte à goutte à l'aide d'une pipette pasteur sous forte agitation (1000-1200 tours.min⁻¹).

La solution obtenue est ensuite maintenue sous agitation à 25°C pendant 1 à 2 heures jusqu'à l'obtention d'une solution limpide avant d'être atomisée en gouttelettes micrométriques dans un flux de gaz chaud (air) à l'aide d'une mono-buse présentant une ouverture de diamètre 0,7 mm.

Le débit de circulation de la solution a été fixé à 0,36 L.h⁻¹. Le débit d'air comprimé pour l'atomisation a été fixé à 670 L.h⁻¹. La circulation d'air pour l'aspiration des gouttelettes atomisées a été fixée à 34 m³/h. La température de consigne en entrée de l'atomiseur a été fixée à 170-180°C pour que la température de sortie observée soit d'environ 90°C.

Les particules ainsi synthétisées et récupérées dans le bac de récupération sont alors stockées hermétiquement dans un flacon en polypropylène à température ambiante pour être ensuite calcinées à 450°C dans un four (rampe de 3°C/min et palier de 2h à 450°C). Le matériau obtenu est sous forme de poudre et présente une surface spécifique BET de 560 m²/g.
e) Matériau mésostructuré à haute surface spécifique micronique à base de lixiviat de lavage de mâchefers, de SiCl₄, de MTEOS et de brij®58 (composition molaire : 1 extrait sec lixiviat : 0,95 SiCl₄ : 0,05 MTEOS : 0,12 brij®58).

Dans un bécher de 200 mL, sont ajoutés dans l'ordre et sous agitation magnétique (500 tours.min⁻¹) les composés suivants : 12,5 mL de lixiviat de lavage de mâchefers avec HCl (37 % en masse), 100 mL d'eau osmosée et 10,24 g de brij®58.

La solution est ensuite maintenue sous agitation à 60°C jusqu'à dissolution complète du brij®58.

Dans un second bécher de 500 mL, 12,27 g de SiCl₄ conservé à 4°C sont ajoutés au goutte à goutte (pipette pasteur) à 21,04 mL d'éthanol absolu conservé à 4°C. La réaction étant exothermique et très réactive, ce mélange s'effectue dans un bain de glace sous forte agitation (1000 tours.min⁻¹). Les 0,51 g de méthyltriéthoxysilane (MTEOS) sont ajoutés au goutte à goutte (pipette pasteur) à la solution SiCl₄/éthanol.

Après dissolution du tensioactif et refroidissement de la solution de lixiviat/brij®58 à 25°C, celle-ci est ajoutée à la solution de SiCl₄/éthanol/MTEOS au goutte à goutte à l'aide d'une pipette pasteur sous forte agitation (1000-1200 tours.min⁻¹).

La solution obtenue est ensuite maintenue sous agitation à 25°C pendant 1 à 2 heures jusqu'à l'obtention d'une solution limpide. La solution est alors atomisée en gouttelettes micrométriques dans un flux de gaz chaud (air) à l'aide d'une mono-buse présentant une ouverture de diamètre 0,7 mm. Le débit de circulation de la solution a été fixé à 0,36 L.h⁻¹. Le débit d'air comprimé pour l'atomisation a été fixé à 670 L.h⁻¹. La circulation d'air pour l'aspiration des gouttelettes atomisées a été fixée à 34 m³/h. La température de consigne en entrée de l'atomiseur a été fixée à 170-180°C pour que la température de sortie observée soit d'environ 90°C.

Les particules ainsi synthétisées et récupérées dans le bac de récupération sont alors stockées hermétiquement dans un flacon en polypropylène à température ambiante pour être ensuite calcinées à 350°C dans un four (rampe de 3°C/min et palier de 2h à 350°C). Le matériau obtenu est sous forme de poudre et présente une surface spécifique BET de 620 m²/g.
f) Matériau mésostructuré à haute surface spécifique micronique à base de lixiviat de lavage de mâchefers, de SiCl₄, de MTEOS et de brij®58 (composition molaire : 1 extrait sec lixiviat : 0,85 SiCl₄ : 0,15 MTEOS : 0,12 brij®58).

Dans un bécher de 200 mL, sont ajoutés dans l'ordre et sous agitation magnétique (500 tours.min⁻¹) les composés suivants : 12,5 mL de lixiviat de lavage de mâchefers avec HCl (37 % en masse), 100 mL d'eau osmosée et 10,24 g de brij®58. La solution est ensuite maintenue sous agitation à 60°C jusqu'à dissolution complète du brij®58.

Dans un second bécher de 500 mL, 11,63 g de SiCl₄ conservé à 4°C sont ajoutés au goutte à goutte (pipette pasteur) à 20,26 mL d'éthanol absolu conservé à 4°C. La réaction étant exothermique et très réactive, ce mélange s'effectue dans un bain de glace sous forte agitation (1000 tours.min⁻¹). Les 1,03 g de méthyltriéthoxysilane (MTEOS) sont ajoutés au goutte à goutte (pipette pasteur) à la solution SiCl₄/éthanol.

Après dissolution du tensioactif et refroidissement de la solution de lixiviat/brij®58 à 25°C, celle-ci est ajoutée à la solution de SiCl_{4/}éthanol/MTEOS au goutte à goutte à l'aide d'une pipette pasteur sous forte agitation (1000-1200 tours.min⁻¹).

La solution obtenue est ensuite maintenue sous agitation à 25°C pendant 1 à 2 heures jusqu'à l'obtention d'une solution limpide. La solution est alors atomisée en gouttelettes micrométriques dans un flux de gaz chaud (air) à l'aide d'une mono-buse présentant une ouverture de diamètre 0,7 mm. Le débit de circulation de la solution a été fixé à 0,36 L.h⁻¹. Le débit d'air comprimé pour l'atomisation a été fixé à 670 L.h⁻¹. La circulation d'air pour l'aspiration des gouttelettes atomisées a été fixée à 34 m³/h. La température de consigne en entrée de l'atomiseur a été fixée à 170-180°C pour que la température de sortie observée soit d'environ 90°C.

Les particules ainsi synthétisées et récupérées dans le bac de récupération sont alors stockées hermétiquement dans un flacon en polypropylène à température ambiante pour être ensuite calcinées à 350°C dans un four (rampe de 3°C/min et palier de 2h à 350°C). Le matériau obtenu est sous forme de poudre et présente une surface spécifique BET de 625 m²/g.
g) Matériau mésostructuré à haute surface spécifique micronique à base de lixiviat de lavage de mâchefers, de SiCl₄, de PTEOS et de brij®58 (composition molaire : 1 extrait sec lixiviat : 0,95 SiCl₄ : 0,05 PTEOS : 0,12 brij®58).

Dans un bécher de 200 mL, sont ajoutés dans l'ordre et sous agitation magnétique (500 tours.min⁻¹) les composés suivants : 12,5 mL de lixiviat de lavage de mâchefers avec HCl (37 % en masse), 100 mL d'eau osmosée et 10,24 g de brij®58. La solution est ensuite maintenue sous agitation à 60°C jusqu'à dissolution complète du brij®58.

Dans un second bécher de 500 mL, 12,27 g de SiCl₄ conservé à 4°C sont ajoutés au goutte à goutte (pipette pasteur) à 21,04 mL d'éthanol absolu conservé à 4°C. La réaction étant exothermique et très réactive, ce mélange s'effectue dans un bain de glace sous forte agitation (1000 tours.min⁻¹). Les 0,91 g de phényltriéthoxysilane (PTEOS) sont ajoutés au goutte à goutte (pipette pasteur) à la solution SiCl₄/éthanol.

Après dissolution du tensioactif et refroidissement de la solution de lixiviat/brij®58 à 25°C, celle-ci est ajoutée à la solution de SiCl₄/éthanol/PTEOS au goutte à goutte à l'aide d'une pipette pasteur sous forte agitation (1000-1200 tours.min⁻¹).

La solution obtenue est ensuite maintenue sous agitation à 25°C pendant 1 à 2 heures jusqu'à l'obtention d'une solution limpide. La solution est alors atomisée en gouttelettes micrométriques dans un flux de gaz chaud (air) à l'aide d'une mono-buse présentant une ouverture de diamètre 0,7 mm. Le débit de circulation de la solution a été fixé à 0,36 L.h⁻¹. Le débit d'air comprimé pour l'atomisation a été fixé à 670 L.h⁻¹. La circulation d'air pour l'aspiration des gouttelettes atomisées a été fixée à 34 m³/h. La température de consigne en entrée de l'atomiseur a été fixée à 170-180°C pour que la température de sortie observée soit d'environ 90°C.

Les particules ainsi synthétisées et récupérées dans le bac de récupération sont alors stockées hermétiquement dans un flacon en polypropylène à température ambiante pour être ensuite calcinées à 350°C dans un four (rampe de 3°C/min et palier de 2h à 350°C). Le matériau obtenu est sous forme de poudre et présente une surface spécifique BET de 695 m²/g.
h) Matériau mésostructuré à haute surface spécifique micronique à base de lixiviat de lavage de mâchefers, de SiCl₄, de APTES et de brij®58 (composition molaire : 1 extrait sec lixiviat : 0,95 SiCl₄ : 0,05 APTES : 0,12 brij®58).

Dans un bécher de 200 mL, sont ajoutés dans l'ordre et sous agitation magnétique (500 tours.min⁻¹) les composés suivants : 12,5 mL de lixiviat de lavage de mâchefers avec HCl (37 % en masse), 100 mL d'eau osmosée et 10,25 g de brij®58. La solution est ensuite maintenue sous agitation à 60°C jusqu'à dissolution complète du brij®58.

Dans un second bécher de 500 mL, 12,27 g de SiCl₄ conservé à 4°C sont ajoutés au goutte à goutte (pipette pasteur) à 21,04 mL d'éthanol absolu conservé à 4°C. La réaction étant exothermique et très réactive, ce mélange s'effectue dans un bain de glace sous forte agitation (1000 tours.min⁻¹). Les 0,84 g d'aminopropyltriéthoxysilane (APTES) sont ajoutés au goutte à goutte (pipette pasteur) à la solution SiCl₄/éthanol.

Après dissolution du tensioactif et refroidissement de la solution de lixiviat/brij®58 à 25°C, celle-ci est ajoutée à la solution de SiCl₄/éthanol/APTES au goutte à goutte à l'aide d'une pipette pasteur sous forte agitation (1000-1200 tours.min⁻¹).

La solution obtenue est ensuite maintenue sous agitation à 25°C pendant 1 à 2 heures jusqu'à l'obtention d'une solution limpide. La solution est alors atomisée en gouttelettes micrométriques dans un flux de gaz chaud (air) à l'aide d'une mono-buse présentant une ouverture de diamètre 0,7 mm. Le débit de circulation de la solution a été fixé à 0,36 L.h⁻¹. Le débit d'air comprimé pour l'atomisation a été fixé à 670 L.h⁻¹. La circulation d'air pour l'aspiration des gouttelettes atomisées a été fixée à 34 m³/h. La température de consigne en entrée de l'atomiseur a été fixée à 170-180°C pour que la température de sortie observée soit d'environ 90°C.

Les particules ainsi synthétisées et récupérées dans le bac de récupération sont alors stockées hermétiquement dans un flacon en polypropylène à température ambiante pour être ensuite calcinées à 350°C dans un four (rampe de 3°C/min et palier de 2h à 350°C). Le matériau obtenu est sous forme de poudre et présente une surface spécifique BET de 410 m²/g.
i) Matériau mésostructuré à haute surface spécifique micronique à base de lixiviat de lavage de mâchefers, de TEOS et de CTAB (composition molaire : 1 extrait sec lixiviat : 1 TEOS : 0,28 CTAB).

Dans un bécher de 500 mL, sont ajoutés dans l'ordre et sous agitation magnétique (500 tours.min⁻¹) les composés suivants : 25 mL de lixiviat de lavage de mâchefers avec HCl (37 % en masse), 200 mL d'eau osmosée et 15,49 g de CTAB. La solution est ensuite maintenue sous agitation jusqu'à dissolution complète du CTAB.

Après dissolution du tensioactif, 31,62 g de tétraéthoxysilane (TEOS) sont ajoutés à la solution au goutte à goutte à l'aide d'une pipette pasteur. La solution est ensuite maintenue sous agitation à 25°C pendant 1 à 2 heures jusqu'à l'obtention d'une solution limpide.

La solution est alors atomisée en gouttelettes micrométriques dans un flux de gaz chaud (air) à l'aide d'une mono-buse présentant une ouverture de diamètre 0,7 mm. Le débit de circulation de la solution a été fixé à 0,36 L.h⁻¹. Le débit d'air comprimé pour l'atomisation a été fixé à 670 L.h⁻¹. La circulation d'air pour l'aspiration des gouttelettes atomisées a été fixée à 34 m³/h. La température de consigne en entrée de l'atomiseur a été fixée à 170-180°C pour que la température de sortie observée soit d'environ 90°C.

Les particules ainsi synthétisées et récupérées dans le bac de récupération sont alors stockées hermétiquement dans un flacon en polypropylène à température ambiante pour être ensuite calciné à 450°C dans un four (rampe de 3°C/min et palier de 2h à 450°C). Le matériau obtenu est sous forme de poudre et présente une surface spécifique BET de 485 m²/g.

## Revendications

1. Procédé de fabrication d'un matériau à haute surface spécifique comprenant une étape d'atomisation d'une composition liquide à base de résidus liquides issus d'une extraction chimique de mâchefers, les mâchefers étant des mâchefers d'incinération d'origine industrielle ou des mâchefers d'incinération d'ordures ménagères.

2. Procédé de fabrication selon la revendication 1, comprenant une étape préalable de préparation de ladite composition liquide, **caractérisé en ce que** la composition est préparée par mélange des résidus liquides issus d'une extraction chimique de mâchefers et d'un agent structurant choisi dans le groupe comprenant les tensioactifs, le polyéthylène glycol, le poly(alcool vinylique), le polyacrylamide, le polyvinylpyrrolidone, le caséine, les composés cellulosiques, les sels minéraux, et leurs mélanges.

3. Procédé de fabrication selon la revendication 2, **caractérisé en ce que** les résidus liquides issus d'une extraction chimique de mâchefers sont obtenus par extraction solide/liquide de mâchefers.

4. Procédé de fabrication selon la revendication 3, **caractérisé en ce que** l'extraction solide/liquide est réalisée avec une solution acide et/ou oxydante.

5. Procédé de fabrication selon la revendication 4, **caractérisé en ce que** la solution acide et/ou oxydante est choisie dans le groupe comprenant une solution d'acide chlorhydrique (HCl), d'acide sulfurique (H₂SO₄), d'acide fluorhydrique (HF), d'oxyde de sodium (Na₂O), d'oxyde de potassium (K₂O), et leurs mélanges ; de préférence une solution d'acide chlorhydrique (HCl), préférentiellement une solution d'acide chlorhydrique (HCl) de 30 à 40% en masse, notamment à 37% en masse.

6. Procédé de fabrication selon l'une des revendications 2 à 5, **caractérisé en ce que** l'agent structurant est choisi parmi les tensioactifs, de préférence parmi les tensioactifs non ioniques, et notamment le polyéthylène glycol hexadécyl éther.

7. Procédé de fabrication selon l'une des revendications 1 à 6, **caractérisé en ce que** la composition à base de résidus liquides issus de l'extraction chimique de mâchefers comprend en outre un précurseur de matrice inorganique et/ou un précurseur de matrice hybride organique/inorganique, un précurseur inorganique étant un précurseur qui donne lieu dans une réaction sol/gel à la création d'une matrice inorganique, un précurseur hybride organique/inorganique étant un précurseur qui donne lieu dans une réaction sol/gel à la création d'une matrice hybride organique/inorganique.

8. Procédé de fabrication selon la revendication 7, **caractérisé en ce que** le précurseur de matrice est choisi dans le groupe comprenant l'acide silicique, les alcoxydes de silicium, le silicate, la silice colloïdale, le tétrachlorure de silicium et leurs mélanges, de préférence le tétrachlorure de silicium.

9. Procédé de fabrication selon l'une des revendications 2 à 6, **caractérisé en ce qu'**il comprend, après ladite étape d'atomisation, une étape d'élimination de l'agent structurant.

10. Procédé de fabrication selon la revendication 9, **caractérisé en ce que** l'étape d'élimination de l'agent structurant est une étape de calcination.

11. Procédé de fabrication selon la revendication 10, **caractérisée en ce que** la calcination est réalisée à une température de 400°C à 600°C, de préférence de 450°C à 550°C, et de préférence encore à environ 500°C.

12. Procédé de fabrication selon la revendication 10 ou 11, **caractérisé en ce que** l'étape de calcination est réalisée pendant une durée de 1h à 3h, de préférence d'environ 2h.

13. Procédé de fabrication selon l'une des revendications 10 à 12, **caractérisé en ce qu'**il comprend en outre, après ladite étape de calcination, une étape de lavage et de séchage.

14. Matériau à base de résidus de mâchefers, susceptible d'être obtenu par le procédé de l'une des revendications 1 à 13, ledit matériau étant **caractérisé par** une haute surface spécifique, déterminée par adsorption d'azote conformément à la norme ASTM D 3663-78 établie à partir de la méthode BRUNAUER-EMMETT-TELLER, allant de 200 m².g⁻¹ à 900 m².g⁻¹, ainsi que par une taille de mésopores, déterminée par microscopie électronique par transmission, allant de 2 nm à 50 nm.

15. Matériau à base de résidus de mâchefers selon la revendication 14, **caractérisé en ce qu'**il présente une taille de particules, déterminée par microscopie électronique par transmission, allant de 0,3 à 100 µm et préférentiellement de 1 à 50 µm.

16. Utilisation d'un matériau à base de résidus de mâchefers tel que défini à l'une des revendications 14 ou 15, en tant que support d'adsorption pour espèces polluantes.

## Patentansprüche

1. Verfahren zur Herstellung eines Materials mit einer hohen spezifischen Oberfläche, umfassend einen Schritt des Zerstäubens einer flüssigen Zusammensetzung auf der Basis von flüssigen Rückständen, die aus einer chemischen Extraktion von Schlacke stammen, wobei die Schlacke Verbrennungsschlacke industriellen Ursprungs oder Schlacke aus der Verbrennung von Haushaltsabfällen ist.

2. Herstellungsverfahren nach Anspruch 1, umfassend einen vorherigen Schritt der Herstellung der flüssigen Zusammensetzung, **dadurch gekennzeichnet, dass** die Zusammensetzung durch Mischen der flüssigen Rückstände aus einer chemischen Extraktion von Schlacke mit einem Strukturierungsmittel hergestellt wird, gewählt aus der Gruppe, umfassend Tenside, Polyethylenglykol, Polyvinylalkohol, Polyacrylamid, Polyvinylpyrrolidon, Kasein, Celluloseverbindungen, Mineralsalze und Mischungen davon.

3. Herstellungsverfahren nach Anspruch 2, **dadurch gekennzeichnet, dass** die flüssigen Rückstände aus einer chemischen Extraktion von Schlacke durch Fest-Flüssig-Extraktion von Schlacke gewonnen werden.

4. Herstellungsverfahren nach Anspruch 3, **dadurch gekennzeichnet, dass** die Fest-Flüssig-Extraktion mit einer Säurelösung und/oder oxidierenden Lösung durchgeführt wird.

5. Herstellungsverfahren nach Anspruch 4, **dadurch gekennzeichnet, dass** die Säurelösung und/oder oxidierende Lösung gewählt wird aus der Gruppe, umfassend eine Lösung von Salzsäure (HCl), Schwefelsäure (H₂SO₄), Flusssäure (HF), Natriumoxid (Na₂O), Kaliumoxid (K₂O) und Mischungen davon; bevorzugt eine Salzsäure (HCI)-Lösung, bevorzugt eine Salzsäure (HCl)-Lösung mit 30 bis 40 Gew.-%, insbesondere 37 Gew.-%.

6. Herstellungsverfahren nach einem der Ansprüche 2 bis 5, **dadurch gekennzeichnet, dass** das Strukturierungsmittel gewählt ist aus Tensiden, bevorzugt aus nichtionischen Tensiden und insbesondere Polyethylenglykolhexadecylether.

7. Herstellungsverfahren nach einem der Ansprüche 1 bis 6, **dadurch gekennzeichnet, dass** die Zusammensetzung auf der Basis von aus der chemischen Extraktion von Schlacke resultierenden flüssigen Rückständen, ferner einen anorganischen Matrixvorläufer und/oder einen organischen/anorganischen hybriden Matrixvorläufer umfasst, wobei ein anorganischer Vorläufer ein Vorläufer ist, der in einer Sol/Gel-Reaktion zur Bildung einer anorganischen Matrix führt und ein organischer/anorganischer hybrider Vorläufer ein Vorläufer ist, der in einer Sol/Gel-Reaktion zur Bildung einer organischen/anorganischen Hybridmatrix führt.

8. Herstellungsverfahren nach Anspruch 7, **dadurch gekennzeichnet, dass** der Matrixvorläufer gewählt ist aus der Gruppe, umfassend Kieselsäure, Siliziumalkoxide, Silikat, kolloidales Siliziumdioxid, Siliziumtetrachlorid und Mischungen davon, bevorzugt Siliziumtetrachlorid.

9. Herstellungsverfahren nach einem der Ansprüche 2 bis 6, **dadurch gekennzeichnet, dass** es nach dem Zerstäubungsschritt einen Schritt des Entfernens des Strukturierungsmittels umfasst.

10. Herstellungsverfahren nach Anspruch 9, **dadurch gekennzeichnet, dass** der Schritt des Entfernens des Strukturierungsmittels ein Kalzinierungsschritt ist.

11. Herstellungsverfahren nach Anspruch 10, **dadurch gekennzeichnet, dass** die Kalzinierung bei einer Temperatur von 400°C bis 600°C, bevorzugt 450°C bis 550°C, und ferner bevorzugt bei etwa 500°C durchgeführt wird.

12. Herstellungsverfahren nach Anspruch 10 oder 11, **dadurch gekennzeichnet, dass** der Kalzinierungsschritt über einen Zeitraum von 1h bis 3h, bevorzugt etwa 2h, durchgeführt wird.

13. Herstellungsverfahren nach einem der Ansprüche 10 bis 12, **dadurch gekennzeichnet, dass** es ferner nach dem Kalzinierungsschritt einen Wasch- und Trocknungsschritt umfasst.

14. Material auf Basis von Schlackerückständen, welches durch das Verfahren nach einem der Ansprüche 1 bis 13 erhalten werden kann, wobei das Material durch eine hohe spezifische Oberfläche gekennzeichnet ist, bestimmt durch Stickstoffadsorption gemäß der Norm ASTM D 3663-78, ermittelt nach der BRUNAUER-EMMETT-TELLER-Methode, welche im Bereich von 200 m².g⁻¹ bis 900 m².g⁻¹ liegt, sowie durch eine Mesoporengröße im Bereich von 2 nm bis 50 nm, bestimmt durch Transmissionselektronenmikroskopie.

15. Material auf Basis von Schlackenrückständen nach Anspruch 14, **dadurch gekennzeichnet, dass** es eine durch Transmissionselektronenmikroskopie bestimmte Teilchengröße von 0,3 bis 100 µm, bevorzugt 1 bis 50 µm, aufweist.

16. Verwendung eines Materials auf Basis von Schlackerückständen nach einem der Ansprüche 14 oder 15 als Adsorptionsträger für Schadstoffe.

## Claims

1. A process for manufacturing a material with a high specific surface area, comprising a step of spraying of a liquid composition based on liquid residues derived from a chemical extraction of clinker, the clinker being industrial waste incineration clinker or household waste incineration clinker.

2. The manufacturing process as claimed in claim 1, comprising a preliminary step of preparing said liquid composition **characterized in that** the composition is prepared by mixing the liquid residues derived from a chemical extraction of clinker and a structuring agent chosen from the group comprising surfactants, polyethylene glycol, poly(vinyl alcohol), polyacrylamide, polyvinylpyrrolidone, casein, cellulose-based compounds, mineral salts, and mixtures thereof.

3. The manufacturing process as claimed in claim 2, **characterized in that** the liquid residues derived from a chemical extraction of clinker are obtained by solid/liquid extraction of clinker.

4. The manufacturing process as claimed in claim 3, **characterized in that** the solid/liquid extraction is performed with an acidic and/or oxidizing solution.

5. The manufacturing process as claimed in claim 4, **characterized in that** the acidic and/or oxidizing solution is chosen from the group comprising a hydrochloric acid (HCl), sulfuric acid (H₂SO₄), hydrofluoric acid (HF), sodium oxide (Na₂O) or potassium oxide (K₂O) solution, and mixtures thereof; preferably a hydrochloric acid (HCI) solution, preferentially a hydrochloric acid (HCI) solution of 30% to 40% by mass, notably at 37% by mass.

6. The manufacturing process as claimed in one of claims 2 to 5, **characterized in that** the structuring agent is chosen from surfactants, preferably from nonionic surfactants, and notably polyethylene glycol hexadecyl ether.

7. The manufacturing process as claimed in one of claims 1 to 6, **characterized in that** the composition based on liquid residues derived from the chemical extraction of clinker also comprises a precursor of an inorganic matrix and/or a precursor of an hybrid organic/inorganic matrix, an inorganic precursor being a precursor which gives rise, in a sol/gel reaction, to the creation of an inorganic matrix, an hybrid organic/inorganic precursor being a precursor which gives rise, in a sol/gel reaction, to the creation of a hybrid organic/inorganic matrix.

8. The manufacturing process as claimed in claim 7, **characterized in that** the matrix precursor is chosen from the group comprising silicic acid, silicon alkoxides, silicate, colloidal silica, silicon tetrachloride, and mixtures thereof, preferably silicon tetrachloride.

9. The manufacturing process as claimed in one of claims 2 to 6, **characterized in that** it comprises, after said spraying step, a step of removing the structuring agent.

10. The manufacturing process as claimed in claim 9, **characterized in that** the step of removing the structuring agent is a calcination step.

11. The manufacturing process as claimed in claim 10, **characterized in that** the calcination is performed at a temperature of from 400°C to 600°C, preferably from 450°C to 550°C and more preferably at about 500°C.

12. The manufacturing process as claimed in claim 10 or 11, **characterized in that** the calcination step is performed for a time of 1 hour to 3 hours, preferably for about 2 hours.

13. The manufacturing process as claimed in one of claims 10 to 12, **characterized in that** it also comprises, after said calcination step, a step of washing and drying.

14. A material based on clinker residues obtainable by the process of one of claims 1 to 13, said material being **characterized by** a high specific surface area, determined by nitrogen adsorption in accordance with the standard ASTM D 3663-78 established from the Brunauer-Emmett-Teller method, ranging from 200 m².g⁻¹ to 900 m².g⁻¹, and also by a mesopore size, determined by transmission electron microscopy, ranging from 2 nm to 50 nm.

15. The material based on clinker residues as claimed in claim 14, **characterized in that** it has a particle size, determined by transmission electron microscopy, ranging from 0.3 to 100 µm and preferentially from 1 to 50 µm.

16. The use of a material based on clinker residues as defined in either of claims 14 and 15, as an adsorption support for pollutant species.
